# EUROPEAN PATENT SPECIFICATION

(11) **EP 4 318 373 B1**
(45) Date of publication and mention of the grant of the patent: **04.03.2026**
(21) Application number: 23170253.1
(22) Date of filing: 27.04.2023
(51) Int. Cl.: G06T 1/00, G06T 11/00, G06T 11/60

(54) **SECURE GRAPHICS WATERMARK**
SICHERES WASSERZEICHEN FÜR GRAFIKEN
FILIGRANE GRAPHIQUE SÉCURISÉ

(30) Priority: 25.07.2022 US 202217872983
(43) Date of publication of application: 07.02.2024
(73) Proprietor: Avago Technologies International Sales Pte. Limited, Singapore 768923 (SG)
(72) Inventor: MONAHAN, Charles Thomas, Mountain View, 94041 (US); NEUMAN, Darren, Palo Alto, 94301 (US)
(74) Representative: Dilg, Haeusler, Schindelmann Patentanwaltsgesellschaft mbH

(56) References cited:
- EP-A1- 2 348 442
- EP-A1- 2 765 530
- US-A- 5 889 949
- US-A- 5 912 710

## Description

### TECHNICAL FIELD

The present description relates in general to video processing including, for example, applying watermarks to video content.

### BACKGROUND

Video content represents valuable intellectual property for many individuals and companies. Distribution of video content to the end consumer presents opportunities for illegal copying of the video content. Efforts to curtail illegal copying activity while preserving the quality of the video content for legal viewers include encrypting the video content and providing an encryption key for legal viewers to decrypt and view the video content; manipulating a portion of the frames of video content outside of the viewable portions with an identifier; and/or placing watermark over the entire frames of video content in a manner that minimizes any negative impact on the quality for the video content.

### BRIEF DESCRIPTION OF THE DRAWINGS

The invention is defined in the appended claims. However, for purposes of explanation, several embodiments of the subject technology are set forth in the following figures.
FIG. 1 is a block diagram illustrating a process for securely applying a watermark graphic to a frame of video content according to aspects of the subject technology.
FIG. 2 illustrates an example of a network environment 200 in which secure watermarking of video content may be implemented according to aspects of the subject technology.
FIG. 3 is a block diagram illustrating components of an electronic device according to aspects of the subject technology.
FIG. 4 is a block diagram depicting components of a secure graphics watermark module according to aspects of the subject technology.
FIG. 5 is a block diagram depicting elements of a parameter set selection system according to aspects of the subject technology.
FIG. 6A is a state diagram illustrating operations of a secure graphic watermark module and FIG. 6B is a state diagram illustrating operations of a configuration module executed by a secure processor according to aspects of the subject technology.
FIG. 7 is a block diagram illustrating components of a secure compositor according to aspects of the subject technology.
FIG. 8 is a block diagram illustrating components of an electronic device according to aspects of the subject technology.
FIG. 9 is a block diagram depicting components of the activity monitor according to aspects of the subject technology.
FIG. 10 is a block diagram depicting components of a brightness check module according to aspects of the subject technology.
FIG. 11 is a block diagram that illustrates an electronic system with which aspects of the subject technology may be implemented.

### DETAILED DESCRIPTION

Video content represents valuable intellectual property for many individuals and companies. Distribution of video content to the end consumer presents opportunities for illegal copying of the video content. Efforts to curtail illegal copying activity while preserving the quality of the video content for legal viewers include encrypting the video content and providing an encryption key for legal viewers to decrypt and view the video content; manipulating a portion of the frames of video content outside of the viewable portions (e.g., the overscan or vertical blanking interval region) with an identifier; and/or placing a watermark over the entire frame of video content in a manner that minimizes any negative impact on the quality for the video content.

The foregoing solutions each come with their own challenges and limitations. For example, encrypting the video content requires additional hardware and/or software to perform encryption before distribution of the video content and decryption before consumption of the video content. In addition, decryption keys must be distributed to legal viewers while keeping the decryption keys out of the hands of unauthorized viewers. Identifiers placed outside of the viewable portions of the frames can be masked using video manipulation techniques thereby defeating the use of the identifiers to determine the source of an illegal copy. Applying watermarks to video content may be compromised by a third-party modifying a watermark and thereby rendering it useless for identification purposes or preventing the watermark from being applied to the video content.

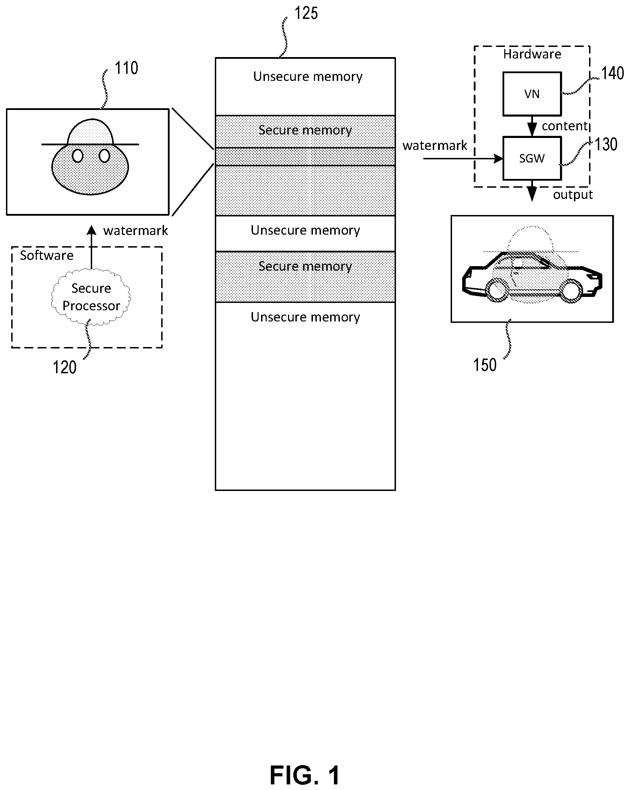

Watermarks may be applied to video content at the time of production, prior to distribution, or at the point of consumption. Applying watermarks at the time of production and/or prior to distribution may be overly complex when taking into account the potentially large number of consumers that must be taken into account. Applying watermarks at the point of consumption may be preferred since the video content has been distributed, decoded, and made available on a digital video output (e.g., HDMI). The subject technology provides a secure, relatively simple design for applying watermark graphics to video content at the point of consumption. Aspects of the design provided by the subject technology are illustrated in FIG. 1.

FIG. 1 is a block diagram illustrating a system for securely applying a watermark graphic to a frame of video content according to aspects of the subject technology. Not all of the depicted components may be required, however, and one or more implementations may include additional components not shown in the figure. Depicted or described connections and couplings between components are not limited to direct connections or direct couplings and may be implemented with one or more intervening components unless expressly stated otherwise.

Briefly, as illustrated in FIG. 1, watermark graphic 110 is generated by secure processor 120 executing one or more trusted applications and stored in a secure location of memory 125. Secure graphics watermark (SGW) module 130 reads watermark graphic 110 from the secure location in memory 125 and blends watermark graphic 110 with a frame of video content provided by video network (VN) 140 to produce blended frame 150. Blended frame 150 is provided to a video output for display on a display device (not shown). Access to the secure location of memory 125 may be restricted to only trusted applications being executed by secure processor 120 and SGW module 130. The use of a software-generated watermark graphic where access to the generation and storage of the watermark graphic is restricted provides flexibility in generating watermark graphics while also minimizing opportunities for unauthorized third parties to modify or remove the watermark graphic before blending with the frame of video content. SGW module 130 may be configured to adjust the intensity or brightness of the watermark graphic based on the underlying content of the frame to minimize negative impact on viewing the video content caused by the overlaid watermark graphic. In addition, the blending of the watermark graphic with the frame of video content may be performed at the end of video processing to prevent the watermark graphic from being obscured by overlaying another graphic image on the frame. To prevent unauthorized third parties from interfering with the application of the watermark graphic, configuration of the SGW module may be restricted to trusted applications being executed by the secure processor. These components and features, as well as other components and features, are described in further detail below.

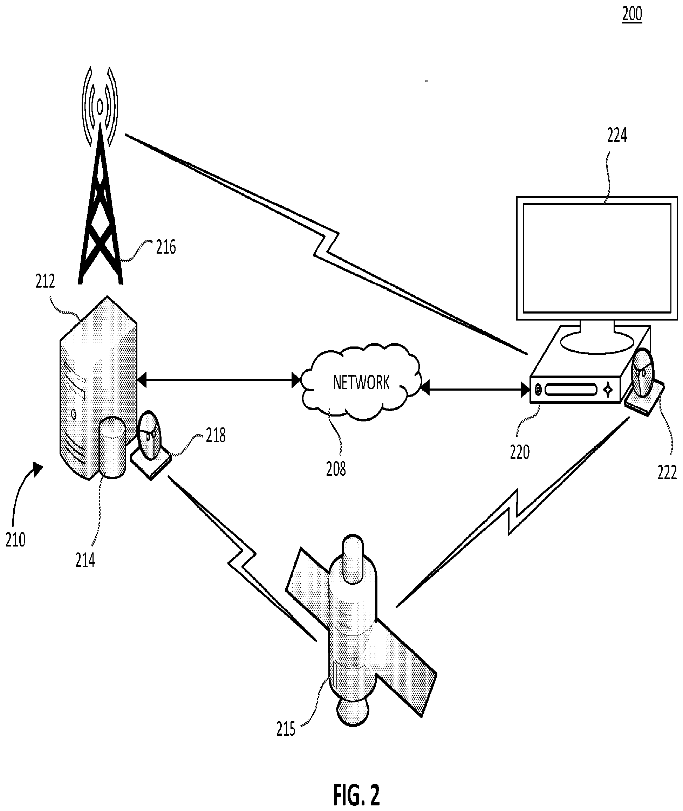

FIG. 2 illustrates an example of a network environment 200 in which secure watermarking of video content may be implemented according to aspects of the subject technology. Not all of the depicted components may be required, however, and one or more implementations may include additional components not shown in the figure. Depicted or described connections and couplings between components are not limited to direct connections or direct couplings and may be implemented with one or more intervening components unless expressly stated otherwise.

The example network environment 200 includes content delivery network (CDN) 210 that is communicably coupled to electronic device 220, such as by network 208. CDN 210 may include, and/or may be communicably coupled to, content server 212, antenna 216, and/or satellite transmitting device 218. Content server 212 can encode and/or transmit encoded data streams, such as MPEG AVC (Advanced Video Coding)/ITU-T H.264 encoded video streams, MPEG HEVC (High-Efficiency Video Coding)/ITU-T H.265 encoded video streams, VP9 encoded video streams, AOM AV1 encoded video streams, and/or MPEG VVC (Versatile Video Coding)/ITU-T H.266 encoded video streams, over network 208. Antenna 216 can transmit encoded data streams over the air, and satellite transmitting device 218 can transmit encoded data streams to satellite 215.

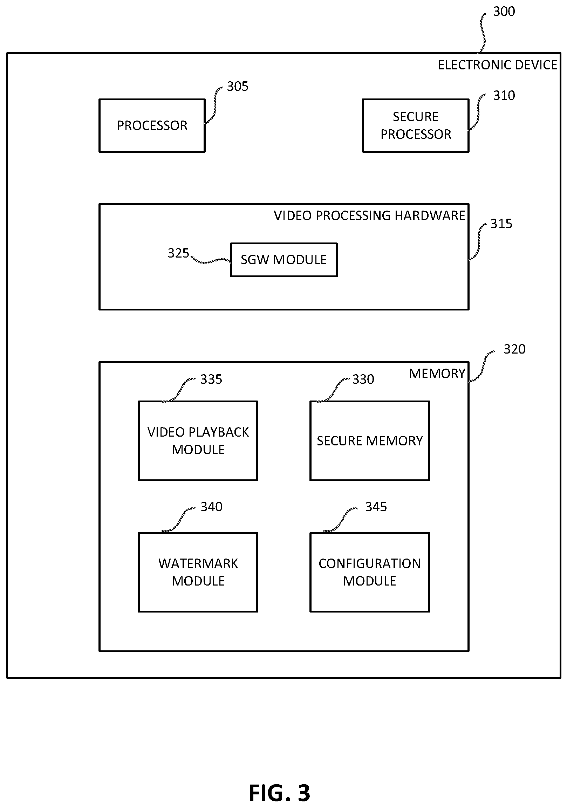

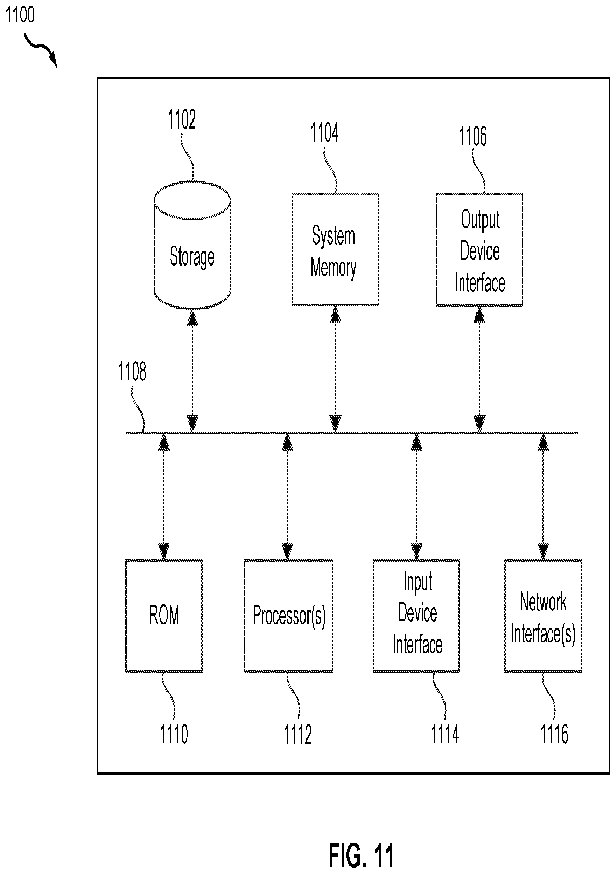

Electronic device 220 may include, and/or may be coupled to, satellite receiving device 222, such as a satellite dish, that receives encoded data streams from satellite 215. In one or more implementations, electronic device 220 may further include an antenna for receiving encoded data streams, such as encoded video streams, over the air from antenna 216 of the CDN 210. Content server 212 and/or electronic device 220 may be, or may include, one or more components of the electronic system described below with respect to FIGs. 3 and/or 11.

Network 208 may be a public communication network (such as the Internet, a cellular data network or dial-up modems over a telephone network) or a private communications network (such as private local area network (LAN) or leased lines). Network 208 may also include, but is not limited to, any one or more of the following network topologies, including a bus network, a star network, a ring network, a mesh network, a star-bus network, a tree or hierarchical network, and the like. In one or more implementations, network 208 may include transmission lines, such as coaxial transmission lines, fiber optic transmission lines, or generally any transmission lines, that communicatively couple content server 212 and electronic device 220.

Content server 212 may include, or may be coupled to, one or more processing devices, data store 214, and/or an encoder. The one or more processing devices execute computer instructions stored in data store 214, for example, to implement a content delivery network. Data store 214 may store the computer instructions on a non-transitory computer-readable medium. An encoder may use a codec to encode video streams, such as an AVC/H.264 codec, an HEVC/H.265 codec, a VP9 codec, an AV1 codec, a VVC/H.266 codec, or any other suitable codec.

In one or more implementations, content server 212 may be a single computing device such as a computer server. Alternatively, content server 212 may represent multiple computing devices that are working together to perform the actions of a server computer (such as a cloud of computers and/or a distributed system). Content server 212 may be coupled with various databases, storage services, or other computing devices, that may be collocated with content server 212 or may be disparately located from content server 212.

Electronic device 220 may include, or may be coupled to, one or more processing devices, a memory, and/or a decoder, such as a hardware decoder. Electronic device 220 may be any device that is capable of decoding an encoded video stream, such as a VVC/H.266 encoded video stream, and displaying the decoded video stream on a display.

In one or more implementations, electronic device 220 may be, or may include all or part of, a set-top box, a laptop or desktop computer, a smartphone, a tablet device, a wearable electronic device such as a pair of glasses or a watch with one or more processors coupled thereto and/or embedded therein, a television or other display with one or more processors coupled thereto and/or embedded therein, video game console, or other electronic devices that can be used to receive and decode an encoded data stream, such as an encoded video stream.

In FIG. 2, electronic device 220 is depicted as a set-top box, e.g., a device that is coupled to, and is capable of displaying video content on display 224, such as a television, a monitor or any device capable of displaying video content. In one or more implementations, electronic device 220 may be integrated into display 224 and/or display 224 may be capable of outputting audio content in addition to video content. Electronic device 220 may receive streams from CDN 210, such as encoded data streams, that include video content, such as television programs, movies, or generally any content items. Electronic device 220 may receive the encoded data streams from the CDN 210 via antenna 216, via network 208, and/or via satellite 215, and decode the encoded data streams, e.g., using a hardware decoder.

FIG. 3 is a block diagram illustrating components of an electronic device, such as electronic device 220 represented in FIG. 2, according to aspects of the subject technology. Not all of the depicted components may be required, however, and one or more implementations may include additional components not shown in the figure. Depicted or described connections and couplings between components are not limited to direct connections or direct couplings and may be implemented with one or more intervening components unless expressly stated otherwise.

In the example depicted in FIG. 3, electronic device 300 includes processor 305, secure processor 310, video processing hardware 315, and memory 320. Processor 305 may include suitable logic, circuitry, and/or code that enable processing data and/or controlling operations of electronic device 300. In this regard, processor 305 may be enabled to provide control signals to various other components of electronic device 300. Processor 305 may also control transfers of data between various portions of electronic device 300. Additionally, processor 305 may enable implementation of an operating system or otherwise execute code to manage operations of electronic device 300.

Processor 305 or one or more portions thereof, may be implemented in software (e.g., instructions, subroutines, code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both.

Secure processor 310 may include suitable logic, circuitry, and/or code that enable processing data and/or securely controlling operations of SGW module 325. In this regard, secure processor 310 may be configured to execute trusted code stored in locations on electronic device 300 that may not be accessible to processor 305 as well as other components of electronic device 300. The trusted code may be considered secure from unwanted modification based on the code being locally stored in a secure location, the code being authenticated using trusted keys, etc. The trusted code may include trusted applications, such as watermark module 340 and configuration module 345 discussed below. Secure processor 310 also may be configured with access to memory locations, such as secure memory 330, that is not accessible to processor 305 or other components of electronic device 300 and is used to store content such as watermark graphics and configuration parameters used by SGW module 325 as described herein.

Secure processor 310 or one or more portions thereof, may be implemented in software (e.g., instructions, subroutines, code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both.

Video processing hardware 315 may include suitable circuitry, logic, and/or code that enable the processing of video content received by electronic device 300 for display on a display device (not shown). Video processing hardware 315 may include, but is not limited to, decoders, scalers, compositors, graphic feeders, raster-timing generators, color space converters, formatters, output interfaces, etc. utilized in the processing and presentation of video content. These components of video processing hardware 315 may be configured and controlled by processor 305 executing code and/or applications stored in memory 320.

In addition, as depicted in FIG. 3, video processing hardware 315 includes SGW module 325. SGW module 325 is a hardware module and may include suitable circuitry, logic, and/or code that enable the secure retrieval and application of watermark graphics on frames of video content as described herein. Unlike the other components of video processing hardware 315, access to and configuration of SGW module 325 is restricted to secure processor 310 and trusted applications executed by secure processor 310. Access restrictions and configuration of SGW module 325 are described in further detail below. Video processing hardware 315 and SGW module 325 may be implemented as a semiconductor device using an Application Specific Integrated Circuit (ASIC), a Field Programmable Gate Array (FPGA), a Programmable Logic Device (PLD), a controller, a state machine, gated logic, discrete hardware components, or any other suitable electronic/semiconductor devices or combinations of these devices.

Memory 320 may include suitable logic, circuitry, and/or code that enable storage of various types of information such as received data, generated data, code, and/or configuration information. Memory 320 may include, for example, random access memory (RAM), read-only memory (ROM), flash memory, magnetic storage, optical storage, etc. As depicted in FIG. 3, memory 320 contains secure memory 330, video playback module 335, watermark module 340, and configuration module 345. The subject technology is not limited to these components both in number and type, and may be implemented using more components or fewer components than are depicted in FIG. 3.

According to aspects of the subject technology, secure memory 330 is a portion of memory 320 for which access is restricted to only secure processor 310 and trusted applications executed by processor 310. Other applications, such as applications executed by processor 305, are not allowed to access secure memory 330. The subject technology is not limited to any particular configurations or techniques for controlling access to secure memory 330. For example, the address space used to store items in secure memory 330 may be configured to be addressable only by secure processor 310. While secure memory 330 is represented as being part of memory 320, the subject technology is not limited to this configuration. For example, secure memory 330 may include suitable logic, circuitry, and/or code separate from that of memory 320.

According to aspects of the subject technology, video playback module 335 comprises a computer program having one or more sequences of instructions or code together with associated data and settings. Upon executing the instructions or code, one or more processes are initiated to perform video playback of video content that may include requesting and receiving video content and configuring and managing aspects of video processing hardware 315, with the exception of SGW module 325, to process the video content. Video playback module 335 also may be configured to generate traditional graphics layers to be overlaid on the displayed video content. The traditional graphics layers may include display setting information, navigation menus, graphics generated by third-party applications, etc. Video playback module 335 may be loaded and executed by processor 305.

According to aspects of the subject technology, watermark module 340 comprises a computer program having one or more sequences of instructions or code together with associated data and settings. Upon executing the instructions or code, one or more processes are initiated to manage the generation and storage of watermark graphics for use by SGW module 325. Watermark module 340 is a trusted application that may be executed by secure processor 310. As a trusted application, watermark module 340 may be stored in a secure location, such as secure memory 330, that is not accessible to processor 305, video playback module 335, or other applications that may be executed by processor 305. In addition, the instructions or code of watermark module 340 may be verified or authenticated before execution using a trusted set of keys. In this manner, watermark module 340 is isolated from unwanted interference or modification of the watermark graphics generated and stored for use by SGW module 325.

The subject technology is not limited to any particular type of watermark graphic. For example, the watermark graphics may include recognizable images, random graphic patterns, graphic patterns encoded with information identifying a source of the video content and/or an identifier of the electronic device used to playback the video content or a user logged onto the electronic device used to playback the video content. The watermark graphics may be selected from a library of watermark graphics securely stored on electronic device 300 or may be generated by watermark module 340 using one or more algorithms. The generated watermark graphics may vary in size/resolution and/or in color space. Watermark module 340 may be provided with information on the size/resolution of the video content being played as well as the color space used for the displayed video content. Watermark module 340 may use this information to generate one or more watermark graphics that match the video content in size/resolution and color space. Watermark module 340 is further configured to store the generated watermark graphics in secure memory locations where access is restricted to secure processor 310 and SGW module 325.

According to aspects of the subject technology, configuration module 345 comprises a computer program having one or more sequences of instructions or code together with associated data and settings. Upon executing the instructions or code, one or more processes are initiated to manage the generation and loading of parameter sets used to configure SGW module 325. Configuration module 345 is a trusted application that may be executed by secure processor 310. As a trusted application, configuration module 345 may be stored in a secure location, such as secure memory 330, that is not accessible to processor 305, video playback module 335, or other applications that may be executed by processor 305. In addition, the instructions or code of configuration module 345 may be verified or authenticated before execution using a trusted set of keys. In this manner, configuration module 345 is isolated from unwanted interference or modification of parameter sets used to configured and control SGW module 325.

As noted above, configuration module generates parameter sets used to configure SGW module 325. One or more parameter sets may be generated and loaded into a set of registers in SGW module 325. As discussed further below, SGW module 325 selects and loads one of the one or more parameters sets for configuration and control of SGW module 325 to apply specified watermark graphics to frames of video content. The selection and loading of a parameter set by SGW module 325 are described below. Parameters in a parameter set may include, but are not limited to, a watermark speed which indicates a number of sequential frames from the video content to apply the current parameter set before selecting and loading another parameter set, a watermark address which may be a pointer (e.g., memory address) to a location in the secure memory storing the watermark graphic to be blended with the number of sequential frames indicated by the watermark speed, an alpha bias which is a bias value used by SGW module 325 to attenuate a brightness or luma value of the watermark graphic before the watermark graphic is blended with a frame of video content, and a color palette which may be a pointer (e.g., memory address) to a location in memory of the associated color palette used by a color look-up table in the processing of the video content.

More than one parameter set may be loaded into the set of registers in SGW module 325. The locations of the parameter sets within the set of registers may be indexed to facilitate access to particular parameter sets when configuring SGW module 325. The parameters may include a next index which is an index value identifying the location of the next parameter set that should be selected and loaded by SGW module 325 once the number of frames specified by the watermark speed in the parameter set have been processed. The parameters also may include a defined next index field that validates the next index parameter in the set. The defined next index field is used by SGW module 325 to determine whether to load the parameter set at the register location indicated by the next index parameter based on the validity of the next index parameter. The selection and loading of parameter sets by SGW module 325 are described in more detail below.

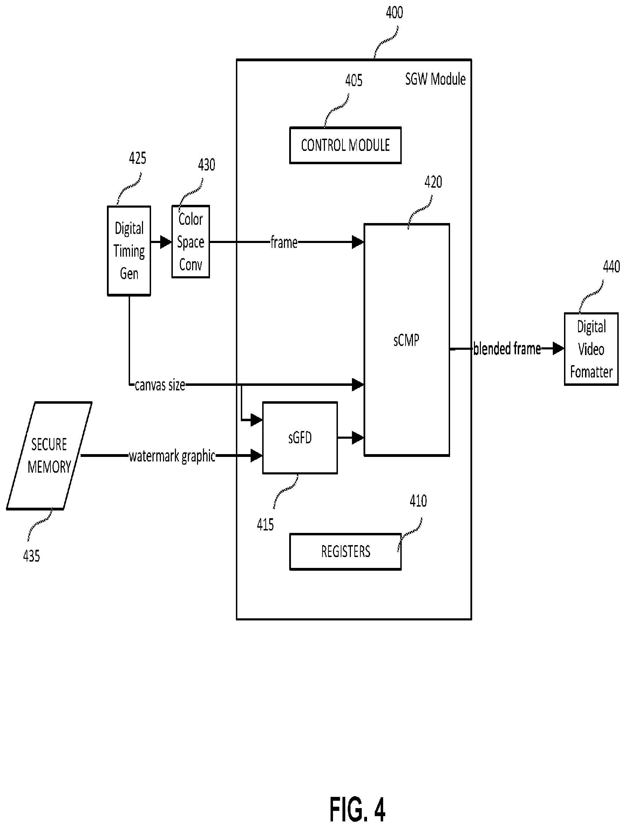

FIG. 4 is a block diagram depicting components of a secure graphics watermark module, such as SGW module 325 depicted in FIG. 3, according to aspects of the subject technology. Not all of the depicted components may be required, however, and one or more implementations may include additional components not shown in the figure. Depicted or described connections and couplings between components are not limited to direct connections or direct couplings and may be implemented with one or more intervening components unless expressly stated otherwise.

As depicted in FIG. 4, SGW module 400 includes control module 405, registers 410, secure graphics feeder (sGFD) 415, and secure compositor (sCMP) 420. According to aspects of the subject technology, control module 405 includes suitable circuitry, logic, and/or code that enable the management of SGW module 400. The management of SGW module 400 may include, but is not limited to, the selection and loading of a current parameter set from parameter sets stored in registers 410 to configure sGFD 415 and sCMP 420, the setting of status information in registers 410, and the issuing of interrupts to the secure processor in the electronic device. According to aspects of the subject technology, registers 410 may include suitable circuitry and logic for storing data values representing status information and configuration parameters for SGW module 400. While control module 405 and registers 410 are depicted in FIG. 4 as being separate from sGFD 415 and sCMP 420, portions or all of the management functions performed by control module 405 and portions or all of registers 410 may be incorporated into sGFD 415 and/or sCMP 420.

According to aspects of the subject technology, SGW module 400 is arranged after raster timing generator 425 and color space converter 430 in a processing pipeline and is configured to receive output canvas size information and frame data at a timing determined by raster timing generator 425 based on an output resolution, where the frame data is converted to an output color space, if needed, by color space converter 430. In this arrangement, SGW module 400 may be placed after a final stage of video manipulation or processing by video processing hardware 315. For example, SGW module 400 may be arranged to apply a watermark graphic to frames of video content after any other graphic overlays, such as traditional graphic layers displaying system information such as volume level, have been applied to the frames. SGW module 400 may be configured to provide the blended frames to digital video formatter 440, which formats the blended frames of video content for output over an interface such as the High-Definition Multimedia Interface (HDMI) and display on a display device. Other processing and/or other interfaces, may be utilized in displaying the blended frame.

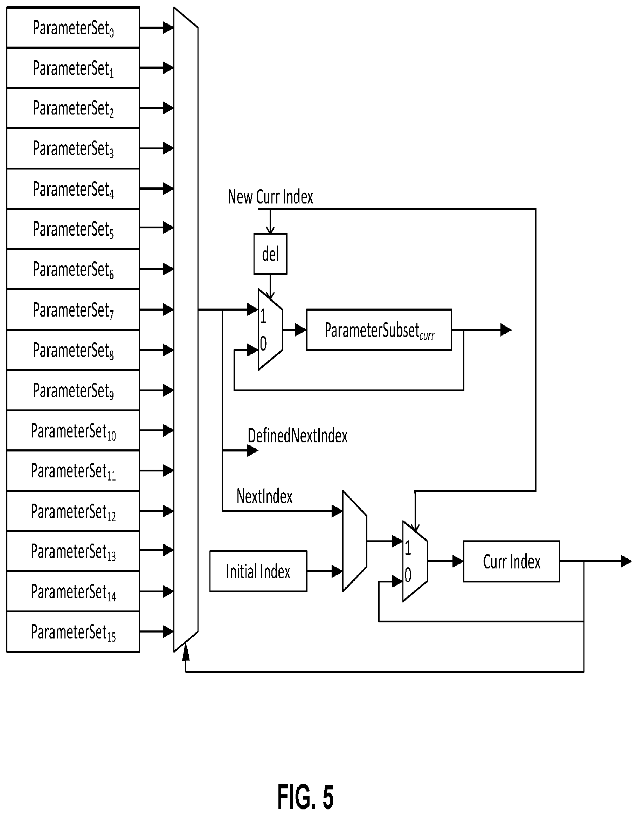

As noted above, configuration module 345 may generate and store one or more parameter sets in the SGW module. The one or more parameter sets may be stored in registers 410. Registers 410 may implement a multi-element buffer to store the parameter sets available for selection by control module 405. FIG. 5 is a block diagram depicting elements of a parameter set selection system according to aspects of the subject technology. Not all of the depicted components may be required, however, and one or more implementations may include additional components not shown in the figure. Depicted or described connections and couplings between components are not limited to direct connections or direct couplings and may be implemented with one or more intervening components unless expressly stated otherwise.

As depicted in FIG. 5, a 16-element buffer is set up in registers 410 (FIG. 4) to store up to 16 parameter sets represented as ParameterSet₀ - ParameterSet₁₅. The subject technology is not limited to 16 buffer elements and may be implemented with more or less than 16 buffer elements. In addition, not all of the 16 buffer elements need to be loaded with a parameter set. For example, the SGW module may operate with just a single parameter set loaded in registers 410 or with multiple parameter sets loaded in registers 410 to select from. The current parameter set used to configure SGW module 400 may be selected from the multi-element buffer using an index value Curr Index. The Curr Index value may be set initially to an index value Initial Index when a control bit indicating the data validity of the parameter sets stored in the multi-element buffer by the configuration module is transitioned to indicate that the parameter sets are valid. The parameters watermark speed, watermark address, alpha bias, and color palette from the current parameter set are stored as ParameterSubset_{curr} for use by sGFD 415 and sCMP 420 until a next parameter set is selected.

As noted above, watermark speed indicates a number of frames of video content for which the current parameter set is used by sGFD 415 and sCMP 420 to process the frames. After the indicated number of frames have been processed, the index value stored as the parameter Next Index in the current parameter set is loaded as the index value Curr Index. The next parameter set is then selected from the multi-element buffer using the Curr Index value, and the parameters stored as ParameterSubset_{curr} are replaced with new parameters from the next parameter set. Using the current parameter set to specify the next parameter set creates a linked-list type of system for selecting and loading parameter sets. The parameter sets may be linked to form a loop that repeatedly cycles through the parameters sets that are part of the loop or the parameter sets may be linked to form a chain that has a first parameter set and a last parameter set. The Next Index parameter value in the last parameter set may not be included or may be indicated by the Defined Next Index parameter as being invalid or not defined. In this situation, the parameters stored as ParameterSubset_{curr} are used until the Next Index parameter value is provided and is indicated by the Defined Next Index parameter as being valid or defined.

According to aspects of the subject technology, the configuration module may add, remove, replace, and/or update parameters sets stored in the multi-element buffer in registers 410, with the exception of the parameters stored as ParameterSubset_{curr} currently being used by the SGW module, during operation of the SGW module. The Defined Next Index parameter may be set to indicate that the Next Index parameter is not defined and therefore operation of the SGW module should not proceed beyond the current parameter set. Accordingly, if the SGW module attempts to use the Next Index parameter value while the Defined Next Index parameter indicates that the Next Index is not defined, the SGW module will stall and continue to use the parameters stored as ParameterSubset_{curr} until the Defined Next Index parameter is changed to indicate that the Next Index parameter is valid. This use of the Defined Next Index parameter allows the system to insert a stall in the command chain before starting to modify parameter sets. Once the modifications are complete, the Defined Next Index parameter is updated to indicate that the Next Index parameter is defined and the next parameter set is selected from the multi-element buffer using the Next Index parameter value.

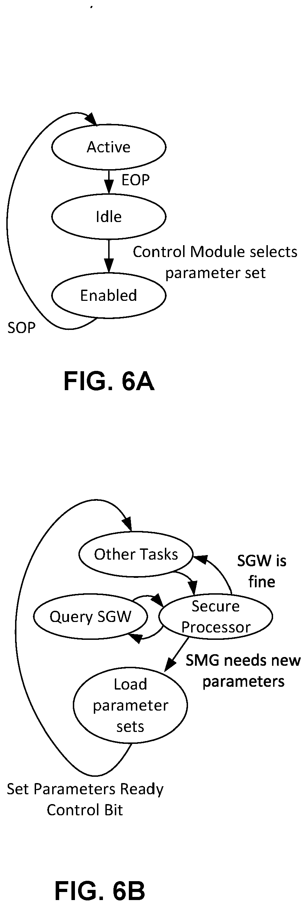

FIG. 6A is a state diagram illustrating operations of a secure graphic watermark module and FIG. 6B is a state diagram illustrating operations of a configuration module executed by a secure processor according to aspects of the subject technology. The linked-list type of system for selecting and loading parameters used by the SGW module to blend watermark graphics and frames of video content allows the SGW module to operate independently without requiring support from the secure processor through the blending of watermark graphics with multiple frames. This independent operation of the SGW module is illustrated in the state diagram depicted in FIG. 6A. As depicted in FIG. 6A, the SGW module is in an active state where a frame of video content is being blended with a watermark graphic using parameters from a current set of parameters. When the end of picture (EOP) pixel is received and the blended frame has been generated, the SGW module enters an idle state where the control module selects and loads the next parameter set in the manner described above. The SGW module then enters an enabled state where the SGW module is configured and is ready to process the next frame. The enabled state may be indicated by an SGW enable control bit being set by the control module. Upon receiving a Start of Picture (SOP) pixel, the SGW module returns to the active state.

Because the SGW module is able to operate independently to process more than one frame without needing support, the secure processor is freed up to perform other tasks that may be needed in the electronic device. According to aspects of the subject technology, the configuration module may be configured to periodically query status registers on the SGW module to determine if new parameter sets are needed. This querying of the SGW module state is depicted in FIG. 6B. The status registers made available by the SGW module may provide status information that includes the current parameter set being used by the SGW module and the number of frames for which the current parameter set has been used. The configuration module determines if new parameter sets are needed by the SGW module based on the queried status information received from the SGW module. For example, the current parameter set being used may be close to the end of a linked list of parameter sets that does not loop back on itself. The indicated number of frames for which the current parameter set has been used may indicate that the SGW module is close to completing the processing of the number of frames indicated in the current parameter set. If the configuration module determines that the SGW module is fine with respect to the parameter sets currently loaded in the registers of the SGW module, the secure processor transitions to an other-tasks state in which one or more other tasks may be performed by the secure processor. If the configuration module determines that the SGW module needs one or more additional parameter sets, the secure processor transitions to a load parameter sets state in which the configuration module loads one or more parameter sets into the registers of the SGW module. After the one or more parameter sets are loaded into the registers of the SGW module, a control bit indicating that the parameter sets currently loaded in the registers of the SGW module are ready to be used is set and the secure processor transitions to the other-tasks state. Upon completion of the other tasks, the secure processor returns to the query the SGW module state to query the status registers again.

According to aspects of the subject technology, the control module may utilize an interrupt to alert the secure processor of certain situations requiring support from the secure processor. For example, if the Defined Next Index parameter value indicates that the Next Index parameter value is missing or is otherwise invalid, an interrupt may be issued to the secure processor to trigger the configuration module to update one or more of the parameters sets already stored in the registers of the SGW module or add new parameter sets to the registers of the SGW module.

Returning to FIG. 4, sGFD 415 includes suitable circuitry, logic, and/or code that enable the reading of a watermark graphic from a location in secure memory 435 identified by the watermark address parameter of the current parameter set and providing the read watermark graphic to sCMP 420 to be blended with a frame of video content. In addition, sGFD 415 may be configured to resize the read watermark graphic based on a canvas size of the frame to be provided to a video output. For example, if the canvas size of the frame is different from the size of the watermark graphic, an internal scaler of sGFD 415 may be configured to automatically resize the watermark graphic to match the canvas size of the frame before providing the resized watermark graphic to sCMP 420.

Resizing the watermark graphic may include upscaling the resolution of the watermark graphic to increase its overall size or downscaling the resolution of the watermark graphic to decrease its overall size. The subject technology is not limited to any particular scaling algorithm or process for either upscaling or downscaling a watermark graphic. It is noted that upscaling involves the use of a single set of filter coefficients. However, downscaling involves the use of multiple sets of filter coefficients, which may be more processing intensive and/or may increase the latency before the watermark graphic is provided to sCMP 420. Accordingly, sGFD 415 may not be configured to automatically downscale the watermark graphic if the canvas size of the frame is smaller than the size of the watermark graphic. In place of downscaling, sGFD 415 may be configured to resize the watermark graphic by cropping the unscaled watermark graphic. For example, sGFD 415 may truncate the lines of the watermark graphic when sufficient pixels have been sent to match the smaller canvas size of the frame.

Changes to the output frame's canvas size as well as changes to the output frame's color space should be infrequent and typically limited to boot-up conditions or reconfiguring the output of the video processing hardware to match a new display setting or a new display device being connected to the electronic device for viewing the video content. The canvas size of the frame and the color space of the frame are provided to sGFD 415 and sCMP 420 by upstream components in the video processing hardware, such as raster timing generator 425 and color space converter 430. When changes to either the canvas size of the frame or the color space of the frame, control module 405 may issue an interrupt to the secure processor to trigger the watermark module to generate one or more new watermark graphics that match the new canvas size of the frame or the new color space of the frame and store the new watermark graphics in secure memory. The parameter sets may then be updated by the configuration module to include pointers to the locations of the new watermark graphics. In this manner, upscaling or cropping the watermark graphics due to differences between the watermark graphics and the frame may be temporary until the new watermark graphics can be generated and the parameter sets updated. According to aspects of the subject technology, a threshold difference between the size of the frame and the size of the watermark graphic may be required before issuing the interrupt to trigger the generation of new watermark graphics.

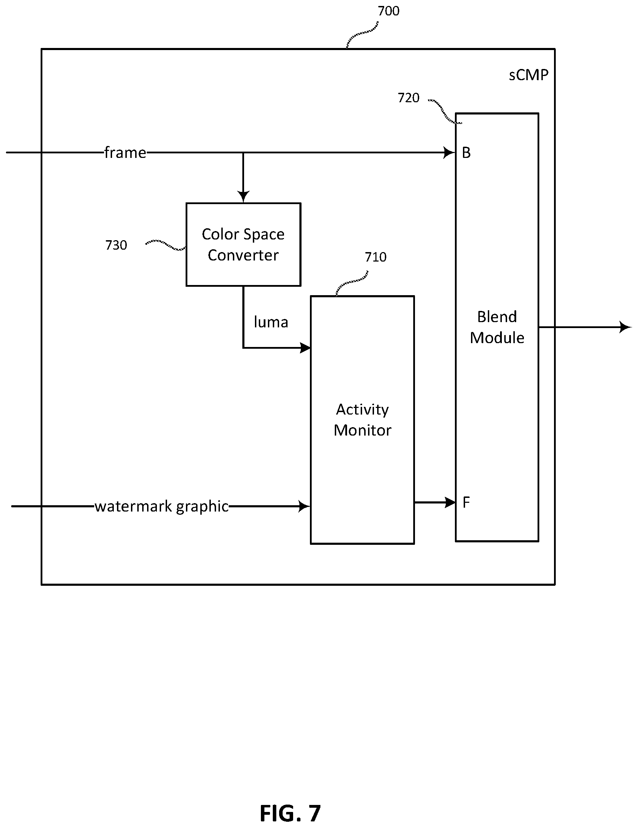

FIG. 7 is a block diagram illustrating components of a secure compositor such as sCMP 420 depicted in FIG. 4, according to aspects of the subject technology. Not all of the depicted components may be required, however, and one or more implementations may include additional components not shown in the figure. Depicted or described connections and couplings between components are not limited to direct connections or direct couplings and may be implemented with one or more intervening components unless expressly stated otherwise.

As depicted in FIG. 7, secure compositor (sCMP) 700 includes activity monitor 710, blend module 720, and color space converter 730. According to aspects of the subject technology, activity monitor 710 includes suitable circuitry, logic, and/or code to enable evaluation of the content of the frame to which a watermark graphic is going to be applied and determination of an attenuation factor to apply to an alpha value or brightness value of the watermark graphic before the watermark graphic is blended with the frame. The content of the frame may be evaluated using the luma values associated with the respective pixels of the frame. If necessary, color space converter 730 may be used to convert a color space such as RGB into a different color space from which a luma value may be obtained. The luma values of adjacent pixels may be evaluated for linear output and brightness according to aspects of the subject technology. Based on the evaluation, the attenuation factor is determined and applied to the watermark graphic before providing the watermark graphic to blend module 720 as the foreground (F) to be blended with the frame as the background (B) and output as a blended frame.

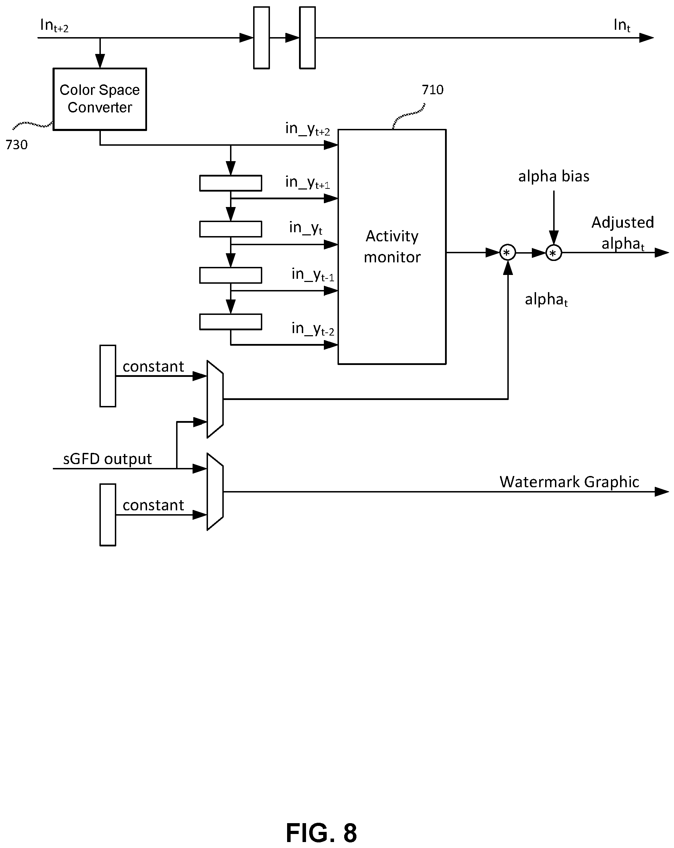

FIG. 8 is a block diagram depicting the inputs and outputs of the activity monitor according to aspects of the subject technology. Not all of the depicted components may be required, however, and one or more implementations may include additional components not shown in the figure. Depicted or described connections and couplings between components are not limited to direct connections or direct couplings and may be implemented with one or more intervening components unless expressly stated otherwise.

As depicted in FIG. 8, activity monitor 710 is configured to receive the luma values from a center pixel of the frame (in_yₜ) and from two adjacent pixels on either side of the center pixel along a horizontal line in the frame (in_yₜ₊₂, in_yₜ₊₁, in_yₜ₋₂, and in_yₜ₋₁) and to generate an attenuation factor based on the luma values. The attenuation factor may be a value between 0.0 and 1.0 that is used to attenuate (i.e., reduce) the alpha value alphaₜ from the watermark graphic provided by the sGFD. Attenuating or reducing the value of alphaₜ makes the watermark graphic appear to be more transparent relative to the content of the frame. The alpha value alphaₜ may be attenuated by multiplying alphaₜ by the attenuation factor from activity monitor 710.

As noted above, the parameter set may include an alpha bias which is a bias value used to attenuate a brightness or luma value (e.g., alpha value) of the watermark graphic. Like the attenuation factor generated by activity monitor 710, the alpha bias may be a value between 0.0 and 1.0. As depicted in FIG. 8, the attenuated alphaₜ value produced by multiplying the attenuation factor by the alphaₜ value may be further attenuated by being multiplied by the alpha bias value to generate an adjusted alphaₜ. The adjusted alphaₜ value may then be provided to blend module 720 to apply to the watermark graphic that is being blended with the frame of video content. According to aspects of the subject technology, a different attenuation factor may be generated by activity monitor 710 for each pixel of the watermark graphic and its corresponding alphaₜ value. A single alpha bias value from the parameter set may be applied to the respective alphaₜ values of all the pixels of the watermark graphic.

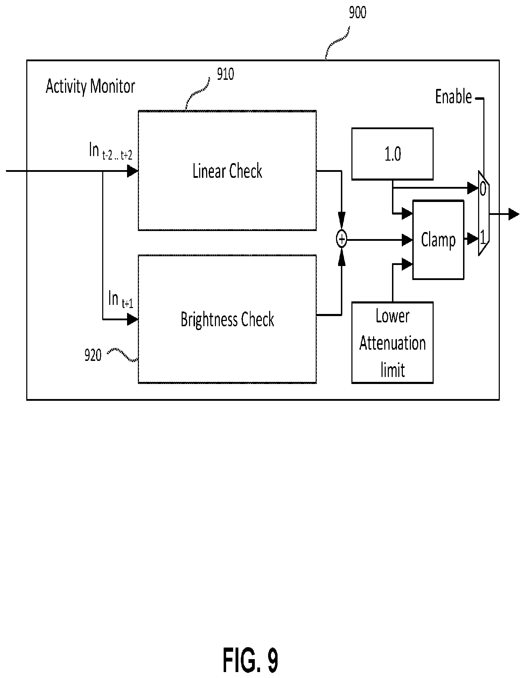

FIG. 9 is a block diagram depicting components of an activity monitor, such as activity monitor 710 depicted in FIG. 7, according to aspects of the subject technology. Not all of the depicted components may be required, however, and one or more implementations may include additional components not shown in the figure. Depicted or described connections and couplings between components are not limited to direct connections or direct couplings and may be implemented with one or more intervening components unless expressly stated otherwise.

As depicted in FIG. 9, activity monitor 900 includes a linear check module 910 and a brightness check module 920. The outputs of these two modules are combined to determine an attenuation factor that is clamped between a maximum value of 1.0 and a lower attenuation limit that is configurable down to 0.0. According to aspects of the subject technology, linear check module 910 includes suitable circuitry, logic, and/or code to enable the determination of whether the luma values associated with a center pixel and two adjacent pixels on either side of the center pixel of the frame define a linear function. A linear function may indicate little to no variation in luma values across the pixels, which may make any watermark graphic applied to the frame more visible across those pixels and therefore require more attenuation to prevent the watermark graphic from distracting from the viewing experience of the video content. Alternatively, if the luma values do not define a linear function, that may indicate variation in luma values across the pixels, which may better conceal or disguise any watermark graphic applied to the frame and therefore require less or no attenuation of the watermark graphic before being applied to the frame. According to aspects of the subject technology, activity monitor 900 may be disabled by the secure processor, which may produce an attenuation factor of one at the output of the activity monitor resulting in no attenuation.

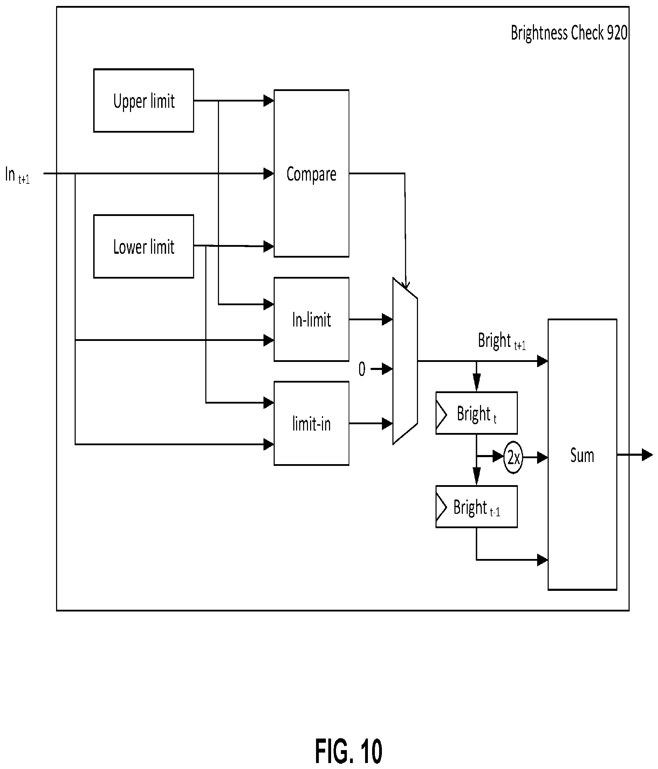

FIG. 10 is a block diagram depicting components of a brightness check module such as brightness check module 920 depicted in FIG. 9, according to aspects of the subject technology. Not all of the depicted components may be required, however, and one or more implementations may include additional components not shown in the figure. Depicted or described connections and couplings between components are not limited to direct connections or direct couplings and may be implemented with one or more intervening components unless expressly stated otherwise.

The operation of the brightness check module is based around observations that linear content does not reveal a luminance change near black, which would indicate that watermark graphics would be undetectable when overlaid on that content. However, the watermark graphic becomes more detectable as the underlying content becomes brighter until the brightness reaches a level where the detectability of the watermark graphic is unacceptable defining a lower limit. A similar upper limit can be defined as the content of the frame approaches white. For example, the lower limit may be ¼ of the maximum brightness and the upper limit may be ¾ of the maximum brightness. As depicted in FIG. 10, the luma value of a pixel is compared against both the upper limit and the lower limit. If the luma value of the pixel is less than the lower limit, the output is set to the difference between the lower limit and the luma value of the pixel. If the luma value of the pixel is greater than the upper limit, the output is set to the difference between the luma value of the pixel and the upper limit. If the luma value of the pixel falls between the two limits, the output is set to zero. The outputs determined for a center pixel and one adjacent pixel on either side is summed and provided as the output of the brightness check module 920 that is combined with the output of the linear check module 910 to determine the attenuation factor.

FIG. 11 conceptually illustrates an electronic system 1100 with which one or more implementations of the subject technology may be implemented. Not all of the depicted components may be required, however, and one or more implementations may include additional components not shown in the figure. Depicted or described connections and couplings between components are not limited to direct connections or direct couplings and may be implemented with one or more intervening components unless expressly stated otherwise.

Electronic system 1100, for example, can be a set top box, a media converter, a desktop computer, a laptop computer, a tablet computer, a smartphone, or generally any electronic device that is capable of presenting video content while applying watermark graphics to the video content as described above. Such an electronic system 1100 includes various types of computer readable media and interfaces for various other types of computer readable media. In one or more implementations, the electronic system 1100 may be, or may include, electronic device 220 and/or electronic device 300 with video processing hardware 315 in addition to the components illustrated in FIG. 11. The electronic system 1100 includes a bus 1108, one or more processing unit(s) 1112, a system memory 1104, a read-only memory (ROM) 1110, a permanent storage device 1102, an input device interface 1114, an output device interface 1106, and a network interface 1116, or subsets and variations thereof.

The bus 1108 collectively represents all system, peripheral, and chipset buses that communicatively connect the numerous internal devices of the electronic system 1100. In one or more implementations, the bus 1108 communicatively connects the one or more processing unit(s) 1112 with the ROM 1110, the system memory 1104, and the permanent storage device 1102. From these various memory units, the one or more processing unit(s) 1112 retrieves instructions to execute and data to process in order to execute the processes of the subject disclosure. The one or more processing unit(s) 1112 can be a single processor or a multicore processor in different implementations.

The ROM 1110 stores static data and instructions that are needed by the one or more processing unit(s) 1112 and other modules of the electronic system. The permanent storage device 1102, on the other hand, is a read-and-write memory device. The permanent storage device 1102 is a non-volatile memory unit that stores instructions and data even when the electronic system 1100 is off. One or more implementations of the subject disclosure use a mass-storage device (such as a solid-state drive, or a magnetic or optical disk and its corresponding disk drive) as the permanent storage device 1102.

Other implementations use a removable storage device (such as a flash memory drive, optical disk and its corresponding disk drive, external magnetic hard drive, etc.) as the permanent storage device 1102. Like the permanent storage device 1102, the system memory 1104 is a read-and-write memory device. However, unlike the permanent storage device 1102, the system memory 1104 is a volatile read-and-write memory, such as random access memory. System memory 1104 stores any of the instructions and data that the one or more processing unit(s) 1112 needs at runtime. In one or more implementations, the processes of the subject disclosure are stored in the system memory 1104, the permanent storage device 1102, and/or the ROM 1110. From these various memory units, the one or more processing unit(s) 1112 retrieves instructions to execute and data to process in order to execute the processes of one or more implementations.

The bus 1108 also connects to the input device interface 1114 and the output device interface 1106. The input device interface 1114 enables a user to communicate information and select commands to the electronic system. Input devices used with the input device interface 1114 include, for example, alphanumeric keyboards and pointing devices (also called "cursor control devices"). The output device interface 1106 enables, for example, the display of images generated by the electronic system 1100. Output devices used with the output device interface 1106 include, for example, printers and display devices, such as a liquid crystal display (LCD), a light emitting diode (LED) display, an organic light emitting diode (OLED) display, a flexible display, a flat panel display, a solid state display, a projector, or any other device for outputting information. One or more implementations include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 11, the bus 1108 also couples the electronic system 1100 to one or more networks (not shown) through one or more network interfaces 1116. In this manner, the computer can be a part of one or more network of computers (such as a local area network (LAN), a wide area network (WAN), or an Intranet, or a network of networks, such as the Internet). Any or all components of the electronic system 1100 can be used in conjunction with the subject disclosure.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In some implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multicore processors that execute software, one or more implementations are performed by one or more integrated circuits, such as application specific integrated circuits (ASICs) or field programmable gate arrays (FPGAs). In one or more implementations, such integrated circuits execute instructions that are stored on the circuit itself.

According to aspects of the subject technology, a method is provided that includes selecting, by a hardware module, a current parameter set; reading, by the hardware module, a watermark graphic from a location in memory indicated by a parameter in the current parameter set, wherein access to the location in memory is restricted to the hardware module and one or more first trusted applications; blending, by the hardware module, the watermark graphic with a frame of video content; and providing, by the hardware module, the blended frame for display.

By restricting access to the location in memory containing the watermark graphic to the hardware module and trusted applications, the subject technology provides a secure approach to applying watermark graphics to video content at the point of consumption with minimized risk of a third party modifying or replacing the watermark graphic. Applying watermarks at the point of consumption is simpler than managing the application of watermarks at points of distribution and/or production. Furthermore, the effective use of watermarks may provide sufficient security for content that encryption/decryption solutions may not be needed thereby preserving computational resources for other processes.

The parameter set may be stored in a set of registers in the hardware module, and access to the set of registers in the hardware module may be restricted to the hardware module and one or more second trusted applications. The current parameter set may be selected from a plurality of parameter sets stored in the set of registers based on an index value indicated in a previous parameter set selected by the hardware module.

As with the secure memory used to store the watermark graphic, restricting access to the set of registers containing the parameter set to the hardware module and trusted applications minimizes the risk of an unauthorized third party manipulating the parameter set to interfere with the watermarking process. In addition, storing and indexing multiple parameter sets the set of registers of the hardware module may facilitate quicker access to selected parameter sets.

The method may further include resizing, by the hardware module, the watermark graphic if a size of the frame is different than a size of the watermark graphic, wherein the resized watermark graphic is blended with the frame of video content. The method may further include cropping, by the hardware module, the watermark graphic if a size of the frame is smaller than a size of the watermark graphic, where the cropped watermark graphic is blended with the frame of video content.

Resizing the watermark graphic at the hardware module if the frame size of the video content is different removes the ability of a third party to interfere with the watermarking process by manipulating the frame size of the video content. The watermark graphic may be resized by upscaling or downscaling the resolution. The subject technology provides the option of cropping the watermark graphic instead of downscaling the resolution of the watermark graphic. Cropping may be more computationally efficient than downscaling allowing the subject technology to provide the resized watermark image more quickly and using less computational resources.

The method may further include attenuating, by the hardware module, a brightness value of the watermark graphic based on a bias value indicated in the current parameter set, wherein the attenuated watermark graphic is blended with the frame of video content. The method may further include determining, by the hardware module, an attenuation factor based on a luma value from the frame of video content; and attenuating, by the hardware module, a brightness value of the watermark graphic based on the determined attenuation factor, wherein the attenuated watermark graphic is blended with the frame of video content.

Attenuation factors may be determined for respective pixels of the frame of video content and are applied to respective brightness values of corresponding pixels of the watermark graphic. The attenuation factor may be determined based on luma values from a plurality of adjacent pixels in the frame of video content. The watermark graphic may be blended by the hardware module with a number of sequential frames of video content, and wherein the number of sequential frames is indicated in the current parameter set.

The brightness or visibility of the watermark graphic in the frame of video content may negatively impact the user experience of viewing the video content. The subject technology utilizes the bias value parameter to control the brightness of the watermark graphic for situations where an owner of the video content, for example, may want the watermark graphic to be displayed more prominently or less prominently over the video content. In addition, attenuating the brightness of the watermark graphic based on luma values of the underlying video content allows the subject technology to avoid disruptions in the user's viewing experience when changes in the video content would otherwise cause the watermark graphic, or portions of the watermark graphic, to be more prominent in the video frame.

According to aspects of the subject technology, a semiconductor device is provided that includes a set of registers, wherein access to the set of registers is restricted to the semiconductor device and a secure processor. The semiconductor device further includes circuitry configured to select a current parameter set from one or more parameter sets stored in the set of registers based on an index value indicated in a previously selected parameter set; read a watermark graphic from a location in memory indicated by a parameter in the current parameter set, wherein access to the location in memory is restricted to the semiconductor device and the secure processor; blend the watermark graphic with a frame of video content; and provide the blended frame for display.

The circuitry may be further configured to resize the watermark graphic if a size of the frame is different than a size of the watermark graphic, where the resized watermark graphic is blended with the frame of video content.

The circuitry may be further configured to attenuate a brightness value of the watermark graphic based on a bias value indicated in the current parameter set, wherein the attenuated watermark graphic is blended with the frame of video content. The circuitry may be further configured to determine an attenuation factor based on luma values from a plurality of adjacent pixels in the frame of video content; and attenuate a brightness value of the watermark graphic based on the determined attenuation factor, wherein the attenuated watermark graphic is blended with the frame of video content. The watermark graphic may be blended with a number of sequential frames of video content, and wherein the number of sequential frames is indicated in the current parameter set.

The features of selecting a parameter set based on an index value from a previous parameter set and/or blending the watermark graphic with multiple sequential frames indicated in the current parameter set allows the subject technology to partially automate the selection and application of watermark graphics to multiple frames of video content which frees up computational resources for other processes.

According to aspects of the subject technology, an electronic device is provided that includes a hardware module including a set of registers; memory; and a processor. The processor is configured to execute one or more trusted applications to store a watermark graphic in a location in the memory, wherein access to the location in the memory is restricted to the one or more trusted applications and the hardware module; and store one or more parameter sets in the set of registers of the hardware module, wherein access to the set of registers is restricted to the one or more trusted applications and the hardware module. The hardware module is configured to select a current parameter set from the one or more parameter sets stored in the set of registers; read the watermark graphic from the location in the memory indicated by a parameter in the current parameter set; blend the watermark graphic with a frame of video content; and provide the blended frame for display.

The processor may be further configured to execute the one or more trusted applications to generate the watermark graphic. The processor may be further configured to execute the one or more trusted applications to query a status indicator of the hardware module, wherein the one or more parameter sets are stored in the set of registers based on the status indicator.

Using trusted applications to generate watermark graphics and storing the watermark graphics in secure memory locations facilitates the advantages of the subject technology to securely and efficiently apply watermark graphics to video content at points of consumption while uniquely identifying the users at those points of consumption.

The hardware module may be further configured to determine an attenuation factor based on one or more luma values from the frame of video content; and attenuate a brightness value of the watermark graphic based on the determined attenuation factor, wherein the attenuated watermark graphic is blended with the frame of video content. The current parameter set may be selected from the one or more parameter sets stored in the set of registers based on an index value indicated in a previous parameter set selected by the hardware module.

## Claims

1. A method, comprising:
selecting, by a hardware module, a current parameter set;
reading, by the hardware module, a watermark graphic from a location in memory indicated by a parameter in the current parameter set, wherein access to the location in memory is restricted to the hardware module and one or more first trusted applications;
blending, by the hardware module, the watermark graphic with a frame of video content; and
providing, by the hardware module, the blended frame for display,
wherein the current parameter set is selected from a plurality of parameter sets stored in a set of registers in the hardware module based on an index value indicated in a previous parameter set selected by the hardware module.

2. The method of claim 1, wherein access to the set of registers in the hardware module is restricted to the hardware module and one or more second trusted applications.

3. The method of any one of the claims 1 to 2, further comprising at least one of the following features (A) and (B):
(A) resizing, by the hardware module, the watermark graphic if a size of the frame is different than a size of the watermark graphic, wherein
the resized watermark graphic is blended with the frame of video content; and
(B) cropping, by the hardware module, the watermark graphic if a size of the frame is smaller than a size of the watermark graphic, wherein
the cropped watermark graphic is blended with the frame of video content.

4. The method of any one of the claims 1 to 3, further comprising:
attenuating, by the hardware module, a brightness value of the watermark graphic based on a bias value indicated in the current parameter set, wherein
the attenuated watermark graphic is blended with the frame of video content.

5. The method of any one of the claims 1 to 4, further comprising:
determining, by the hardware module, an attenuation factor based on a luma value from the frame of video content; and
attenuating, by the hardware module, a brightness value of the watermark graphic based on the determined attenuation factor, wherein
the attenuated watermark graphic is blended with the frame of video content.

6. The method of claim 5, wherein
attenuation factors are determined for respective pixels of the frame of video content and are applied to respective brightness values of corresponding pixels of the watermark graphic; and/or
the attenuation factor is determined based on luma values from a plurality of adjacent pixels in the frame of video content.

7. The method of any one of the claims 1 to 6, wherein
the watermark graphic is blended by the hardware module with a number of sequential frames of video content, and wherein the number of sequential frames is indicated in the current parameter set.

8. A semiconductor device, comprising:
a set of registers, wherein access to the set of registers is restricted to the semiconductor device and a secure processor; and
circuitry configured to:
select a current parameter set from one or more parameter sets stored in the set of registers based on an index value indicated in a previously selected parameter set;
read a watermark graphic from a location in memory indicated by a parameter in the current parameter set, wherein access to the location in memory is restricted to the semiconductor device and the secure processor;
blend the watermark graphic with a frame of video content; and
provide the blended frame for display.

9. The semiconductor device of claim 8, wherein the circuitry is further configured to carry out at least one of :
(A) resize the watermark graphic if a size of the frame is different than a size of the watermark graphic, wherein
the resized watermark graphic is blended with the frame of video content;
(B) attenuate a brightness value of the watermark graphic based on a bias value indicated in the current parameter set, wherein
the attenuated watermark graphic is blended with the frame of video content; and
(C) determine an attenuation factor based on luma values from a plurality of adjacent pixels in the frame of video content; and
attenuate a brightness value of the watermark graphic based on the determined attenuation factor, wherein
the attenuated watermark graphic is blended with the frame of video content.

10. The semiconductor device of claim 8 or 9, wherein
the watermark graphic is blended with a number of sequential frames of video content, and wherein the number of sequential frames is indicated in the current parameter set.

11. An electronic device, comprising:
a hardware module including a set of registers;
memory; and
a processor,
wherein the processor is configured to execute one or more trusted applications to:
store a watermark graphic in a location in the memory, wherein access to the location in the memory is restricted to the one or more trusted applications and the hardware module; and
store one or more parameter sets in the set of registers of the hardware module,
wherein access to the set of registers is restricted to the one or more trusted applications and
the hardware module,
wherein the hardware module is configured as the circuitry of the semiconductor device according to any one of the preceding claims 8 to 10.

12. The electronic device of claim 11, wherein the processor is further configured to execute the one or more trusted applications to
(A) generate the watermark graphic; and/or
(B) query a status indicator of the hardware module, wherein
the one or more parameter sets are stored in the set of registers based on the status indicator.

13. The electronic device of claim 11 or 12, wherein the hardware module is further configured to:
determine an attenuation factor based on one or more luma values from the frame of video content; and
attenuate a brightness value of the watermark graphic based on the determined attenuation factor, wherein
the attenuated watermark graphic is blended with the frame of video content.

14. The electronic device of any one of the claims 11 to 13, wherein
the current parameter set is selected from the one or more parameter sets stored in the set of registers based on an index value indicated in a previous parameter set selected by the hardware module.

## Patentansprüche

1. Ein Verfahren, aufweisend:
Auswählen, mittels eines Hardwaremoduls, eines aktuellen Parametersatzes;
Lesen, mittels des Hardwaremoduls, einer Wasserzeichengrafik von einem Ort im Speicher, der durch einen Parameter in dem aktuellen Parametersatz angezeigt wird, wobei der Zugriff auf den Ort im Speicher auf das Hardwaremodul und eine oder mehrere erste vertrauenswürdige Anwendungen beschränkt ist;
Mischen, mittels des Hardwaremoduls, der Wasserzeichengrafik mit einem Frame von Videoinhalt; und
Bereitstellen, mittels des Hardwaremoduls, des gemischten Frames zur Anzeige, wobei der aktuelle Parametersatz aus einer Mehrzahl von Parametersätzen ausgewählt ist, die in einem Satz von Registern in dem Hardwaremodul gespeichert sind, basierend auf einem Indexwert, der in einem vorherigen Parametersatz angezeigt wird, der von dem Hardwaremodul ausgewählt wurde.

2. Das Verfahren gemäß Anspruch 1,
wobei der Zugriff auf den Satz von Registern in dem Hardwaremodul auf das Hardwaremodul und eine oder mehrere zweite vertrauenswürdige Anwendungen beschränkt ist.

3. Das Verfahren gemäß einem der Ansprüche 1 bis 2, ferner aufweisend zumindest eines der folgenden Merkmale (A) und (B):
(A) Ändern der Größe, mittels des Hardwaremoduls, der Wasserzeichengrafik, wenn eine Größe des Frames sich von einer Größe der Wasserzeichengrafik unterscheidet, wobei die in der Größe geänderte Wasserzeichengrafik mit dem Frame von Videoinhalt gemischt wird; und
(B) Beschneiden, mittels des Hardwaremoduls, der Wasserzeichengrafik, wenn eine Größe des Frames kleiner als eine Größe der Wasserzeichengrafik ist, wobei die beschnittene Wasserzeichengrafik mit dem Frame von Videoinhalt gemischt wird.

4. Das Verfahren gemäß einem der Ansprüche 1 bis 3, ferner aufweisend:
Abschwächen, mittels des Hardwaremoduls, eines Helligkeitswerts der Wasserzeichengrafik basierend auf einem in dem aktuellen Parametersatz angezeigten Bias-Wert, wobei
die abgeschwächte Wasserzeichengrafik mit dem Frame von Videoinhalt gemischt wird.

5. Das Verfahren gemäß einem der Ansprüche 1 bis 4, ferner aufweisend:
Bestimmen, mittels des Hardwaremoduls, eines Abschwächungsfaktors basierend auf einem Luma-Wert aus dem Frame von Videoinhalt; und
Abschwächen, mittels des Hardwaremoduls, eines Helligkeitswerts der Wasserzeichengrafik basierend auf dem bestimmten Abschwächungsfaktor, wobei die abgeschwächte Wasserzeichengrafik mit dem Frame von Videoinhalt gemischt wird.

6. Das Verfahren gemäß Anspruch 5, wobei
Abschwächungsfaktoren für jeweilige Pixel des Frames von Videoinhalt bestimmt werden und auf jeweilige Helligkeitswerte von entsprechenden Pixeln der Wasserzeichengrafik angewendet werden; und/oder
der Abschwächungsfaktor basierend auf Luma-Werten aus einer Mehrzahl von benachbarten Pixeln in dem Frame von Videoinhalt bestimmt wird.

7. Das Verfahren gemäß einem der Ansprüche 1 bis 6, wobei
die Wasserzeichengrafik mittels des Hardwaremoduls mit einer Anzahl von sequentiellen Frames von Videoinhalt gemischt wird, und wobei die Anzahl von sequentiellen Frames in dem aktuellen Parametersatz angegeben wird.

8. Eine Halbleitervorrichtung, aufweisend:
einen Satz von Registern, wobei der Zugriff auf den Satz von Registern auf die Halbleitervorrichtung und einen sicheren Prozessor beschränkt ist; und
eine Verschaltung, die konfiguriert ist zum:
Auswählen eines aktuellen Parametersatzes aus einem oder mehreren Parametersätzen, die in dem Satz von Registern gespeichert sind, basierend auf einem Indexwert, der in einem zuvor ausgewählten Parametersatz angegeben wird;
Lesen einer Wasserzeichengrafik von einem Ort im Speicher, der durch einen Parameter in dem aktuellen Parametersatz angezeigt wird, wobei der Zugriff auf den Ort im Speicher auf die Halbleitervorrichtung und den sicheren Prozessor beschränkt ist;
Mischen der Wasserzeichengrafik mit einem Frame von Videoinhalt; und
Bereitstellen des gemischten Frames zur Anzeige.

9. Die Halbleitervorrichtung gemäß Anspruch 8, wobei die Verschaltung ferner konfiguriert ist zum Ausführen von mindestens einem von:
(A) Ändern der Größe der Wasserzeichengrafik, wenn eine Größe des Frames sich von einer Größe der Wasserzeichengrafik unterscheidet, wobei
die in der Größe geänderte Wasserzeichengrafik mit dem Frame von Videoinhalt gemischt wird;
(B) Abschwächen eines Helligkeitswerts der Wasserzeichengrafik basierend auf einem in dem aktuellen Parametersatz angezeigten Bias-Wert, wobei
die abgeschwächte Wasserzeichengrafik mit dem Frame von Videoinhalt gemischt wird; und
(C) Bestimmen eines Abschwächungsfaktors basierend auf Luma-Werten aus einer Mehrzahl von benachbarten Pixeln in dem Frame von Videoinhalt; und
Abschwächen eines Helligkeitswerts der Wasserzeichengrafik basierend auf dem bestimmten Abschwächungsfaktor, wobei
die abgeschwächte Wasserzeichengrafik mit dem Frame von Videoinhalt gemischt wird.

10. Die Halbleitervorrichtung gemäß Anspruch 8 oder 9, wobei
die Wasserzeichengrafik mit einer Anzahl von sequentiellen Frames von Videoinhalt gemischt wird, und wobei die Anzahl von sequentiellen Frames in dem aktuellen Parametersatz angegeben wird.

11. Eine elektronische Vorrichtung, aufweisend:
ein Hardwaremodul, das einen Satz von Registern beinhaltet;
einen Speicher; und
einen Prozessor,
wobei der Prozessor konfiguriert ist zum Ausführen einer oder mehrerer vertrauenswürdiger Anwendungen zum:
Speichern einer Wasserzeichengrafik an einem Ort in dem Speicher, wobei der Zugriff auf den Ort in dem Speicher auf die eine oder die mehreren vertrauenswürdigen Anwendungen und das Hardwaremodul beschränkt ist; und
Speichern eines oder mehrerer Parametersätze in dem Satz von Registern des Hardwaremoduls, wobei der Zugriff auf den Satz von Registern auf die eine oder die mehreren vertrauenswürdigen Anwendungen und das Hardwaremodul beschränkt ist, wobei das Hardwaremodul als die Verschaltung der Halbleitervorrichtung gemäß einem der vorhergehenden Ansprüche 8 bis 10 konfiguriert ist.

12. Die elektronische Vorrichtung gemäß Anspruch 11, wobei der Prozessor ferner konfiguriert ist zum Ausführen der einen oder der mehreren vertrauenswürdigen Anwendungen zum
(A) Erzeugen der Wasserzeichengrafik; und/oder
(B) Abfragen eines Statusindikators des Hardwaremoduls, wobei
der eine oder die mehreren Parametersätze basierend auf dem Statusindikator in dem Satz von Registern gespeichert sind.

13. Die elektronische Vorrichtung gemäß Anspruch 11 oder 12, wobei das Hardwaremodul ferner konfiguriert ist zum:
Bestimmen eines Abschwächungsfaktors basierend auf einem oder mehreren Luma-Werten aus dem Frame von Videoinhalt; und
Abschwächen eines Helligkeitswerts der Wasserzeichengrafik basierend auf dem bestimmten Abschwächungsfaktor, wobei
die abgeschwächte Wasserzeichengrafik mit dem Frame von Videoinhalt gemischt wird.

14. Die elektronische Vorrichtung gemäß einem der Ansprüche 11 bis 13, wobei der aktuelle Parametersatz aus dem einen oder den mehreren Parametersätzen ausgewählt ist, die in dem Satz von Registern gespeichert sind, basierend auf einem Indexwert, der in einem vorherigen Parametersatz angezeigt wird, der von dem Hardwaremodul ausgewählt wurde.

## Revendications

1. Procédé, comprenant les étapes consistant à :
sélectionner, par l'intermédiaire d'un module matériel, un ensemble de paramètres actuels ;
lire, par l'intermédiaire du module matériel, un graphique de filigrane à partir d'un emplacement en mémoire indiqué par un paramètre dans l'ensemble de paramètres actuel, dans lequel l'accès à l'emplacement en mémoire est limité au module matériel et à une ou plusieurs premières applications de confiance ;
mélanger, par l'intermédiaire du module matériel, le graphique de filigrane avec une trame de contenu vidéo ; et
fournir, par l'intermédiaire du module matériel, la trame mélangée pour affichage,
dans lequel l'ensemble de paramètres actuel est sélectionné à partir d'une pluralité d'ensembles de paramètres stockés dans un ensemble de registres dans le module matériel sur la base d'une valeur d'index indiquée dans un ensemble de paramètres précédent sélectionné par le module matériel.

2. Procédé selon la revendication 1, dans lequel l'accès à l'ensemble de registres dans le module matériel est limité au module matériel et à une ou plusieurs secondes applications de confiance.

3. Procédé selon l'une quelconque des revendications 1 à 2, comprenant en outre au moins une des caractéristiques (A) et (B) suivantes :
(A) un redimensionnement, par l'intermédiaire du module matériel, le graphique de filigrane si une taille de la trame est différente d'une taille du graphique de filigrane, dans lequel
le graphique de filigrane redimensionné est mélangé avec la trame de contenu vidéo ; et
(B) un recadrage, par l'intermédiaire du module matériel, du graphique de filigrane si une taille de la trame est inférieure à une taille du graphique de filigrane, dans lequel
le graphique de filigrane recadré est mélangé avec la trame de contenu vidéo.

4. Procédé selon l'une quelconque des revendications 1 à 3, comprenant en outre l'étape consistant à :
atténuer, par l'intermédiaire du module matériel, une valeur de luminosité du graphique de filigrane sur la base d'une valeur de polarisation indiquée dans l'ensemble de paramètres actuel, dans lequel
le graphique de filigrane atténué est mélangé avec la trame de contenu vidéo.

5. Procédé selon l'une quelconque des revendications 1 à 4, comprenant en outre les étapes consistant à :
déterminer, par l'intermédiaire du module matériel, un facteur d'atténuation basé sur une valeur de luma à partir de la trame de contenu vidéo ; et
atténuer, par l'intermédiaire du module matériel, une valeur de luminosité du graphique de filigrane sur la base du facteur d'atténuation déterminé, dans lequel
le graphique de filigrane atténué est mélangé avec la trame de contenu vidéo.

6. Procédé selon la revendication 5, dans lequel
des facteurs d'atténuation sont déterminés pour des pixels respectifs de la trame de contenu vidéo et sont appliqués aux valeurs de luminosité respectives de pixels correspondants du graphique de filigrane ; et/ou
le facteur d'atténuation est déterminé sur la base de valeurs de luma à partir d'une pluralité de pixels adjacents dans la trame de contenu vidéo.

7. Procédé selon l'une quelconque des revendications 1 à 6, dans lequel
le graphique de filigrane est mélangé par l'intermédiaire du module matériel avec un certain nombre de trames séquentielles de contenu vidéo, et dans lequel le nombre de trames séquentielles est indiqué dans l'ensemble de paramètres actuel.

8. Dispositif à semi-conducteur, comprenant :
un ensemble de registres, dans lequel l'accès à l'ensemble de registres est limité au dispositif à semi-conducteur et à un processeur sécurisé ; et
des circuits configurés pour :
sélectionner un ensemble de paramètres actuel parmi un ou plusieurs ensembles de paramètres stockés dans l'ensemble de registres sur la base d'une valeur d'index indiquée dans un ensemble de paramètres sélectionné précédemment ;
lire un graphique de filigrane à partir d'un emplacement en mémoire indiqué par un paramètre dans l'ensemble de paramètres actuel, dans lequel l'accès à l'emplacement en mémoire est limité au dispositif à semi-conducteur et au processeur sécurisé ;
mélanger le graphique de filigrane avec une trame de contenu vidéo ; et
fournir la trame mélangée pour affichage.

9. Dispositif à semi-conducteur selon la revendication 8, dans lequel les circuits sont en outre configurés pour effectuer au moins un parmi :
(A) un redimensionnement du graphique de filigrane si une taille de la trame est différente d'une taille du graphique de filigrane, dans lequel
le graphique de filigrane redimensionné est mélangé avec la trame de contenu vidéo ;
(B) une atténuation d'une valeur de luminosité du graphique de filigrane sur la base d'une valeur de biais indiquée dans l'ensemble de paramètres actuel, dans lequel
le graphique de filigrane atténué est mélangé avec la trame de contenu vidéo ; et
(C)une détermination d'un facteur d'atténuation sur la base de valeurs de luma à partir d'une pluralité de pixels adjacents dans la trame de contenu vidéo ; et
une atténuation d'une valeur de luminosité du graphique en filigrane sur la base du facteur d'atténuation déterminé, dans lequel
le graphique de filigrane atténué est mélangé avec la trame de contenu vidéo.

10. Dispositif à semi-conducteur selon la revendication 8 ou 9, dans lequel
le graphique de filigrane est mélangé à un certain nombre de trames séquentielles de contenu vidéo, et
dans lequel le nombre de trames séquentielles est indiqué dans l'ensemble de paramètres actuel.

11. Dispositif électronique, comprenant :
un module matériel incluant un ensemble de registres ;
une mémoire ; et
un processeur,
dans lequel le processeur est configuré pour exécuter une ou plusieurs applications de confiance pour :
stocker un graphique de filigrane dans un emplacement dans la mémoire, dans lequel l'accès à l'emplacement dans la mémoire est limité aux une ou plusieurs applications de confiance et au module matériel ; et
stocker un ou plusieurs ensembles de paramètres dans l'ensemble de registres du module matériel,
dans lequel l'accès à l'ensemble de registres est limité aux une ou plusieurs applications de confiance et au module matériel,
dans lequel le module matériel est configuré sous la forme des circuits du dispositif à semi-conducteur selon l'une quelconque des revendications précédentes 8 à 10.

12. Dispositif électronique selon la revendication 11, dans lequel le processeur est en outre configuré pour exécuter les une ou plusieurs applications de confiance pour
(A) générer le graphique de filigrane ; et/ou
(B) interroger un indicateur d'état du module matériel, dans lequel
les un ou plusieurs ensembles de paramètres sont stockés dans l'ensemble de registres sur la base de l'indicateur d'état.

13. Dispositif électronique selon la revendication 11 ou 12, dans lequel le module matériel est en outre configuré pour :
déterminer un facteur d'atténuation sur la base d'une ou plusieurs valeurs de luma à partir de la trame de contenu vidéo ; et
une atténuation d'une valeur de luminosité du graphique en filigrane sur la base du facteur d'atténuation déterminé, dans lequel
le graphique de filigrane atténué est mélangé avec la trame de contenu vidéo.

14. Dispositif électronique selon l'une quelconque des revendications 11 à 13, dans lequel
l'ensemble de paramètres actuel est sélectionné parmi les un ou plusieurs ensembles de paramètres stockés dans l'ensemble de registres sur la base d'une valeur d'index indiquée dans un ensemble de paramètres précédent sélectionné par le module matériel.
